# FASCICULE DE BREVET EUROPEEN

(11) **EP 2 441 706 B1**
(45) Date de publication et mention de la délivrance du brevet: **13.03.2013**
(21) Numéro de dépôt: 11182283.9
(22) Date de dépôt: 22.09.2011
(51) Int. Cl.: B65G 13/00, B65G 43/08

(54) **Dispositif de détection pour convoyeur**
Detektionseinrichtung für eine Fördereinrichtung
Detection device for a conveyor

(30) Priorité: 13.10.2010 FR 1058320
(43) Date de publication de la demande: 18.04.2012
(73) Titulaire: Schneider Electric Industries SAS, 92500 Rueil-Malmaison (FR)
(72) Inventeur: De Martin, Lino, 76780 CROISY SUR ANDELLE (FR)
(74) Mandataire: Bié, Nicolas

(56) Documents cités:
- EP-A1- 1 855 967
- US-A- 4 240 538

## Description

La présente invention se rapporte à un dispositif de détection destiné à être employé pour détecter le passage de marchandises sur un convoyeur selon le préambule de la revendication 1.

L'invention se rapporte également à un système de convoyage selon le préambule de la revendication 9.

Il est connu d'employer des détecteurs pour détecter le passage de marchandises sur un convoyeur. Un détecteur est par exemple positionné à une hauteur voulue par rapport à la surface de convoyage, sa sortie étant activée à chaque passage d'une marchandise dans sa zone de détection.

Dans ces solutions, la position du détecteur doit être choisie par rapport à la taille de la marchandise à détecter. De plus, un support particulier pour positionner le détecteur doit souvent être prévu. Enfin, comme le détecteur est positionné de manière apparente, il peut arriver qu'un choc entraîne son déplacement, son dérèglement, voire sa dégradation ayant pour conséquence une détection défectueuse des marchandises.

Le document US4,240,538 décrit un dispositif de détection selon le préambule de la revendication 1, employé dans un système de convoyage selon le préambule de la revendication 9, positionné sous les rouleaux de convoyage. Ce dispositif n'est pas satisfaisant car il ne permet pas de détecter le passage de la marchandise sur toute la largeur du convoyeur.

Le document EP1 855 967 décrit un support sur lequel sont positionnés plusieurs détecteurs, ledit support étant positionné transversalement à la direction de convoyage. Ce dispositif n'est pas satisfaisant car il ne peut pas s'intégrer facilement dans un convoyeur existant sans avoir recours à des moyens de fixation spécifiques et encombrants.

Dans ces deux documents, les dispositifs sont également peu protégés des poussières et sont facilement susceptibles de se dérégler avec le temps.

Le but de l'invention est de proposer un dispositif de détection qui permet de détecter les marchandises sur un convoyeur quelles que soient la taille et la position de ces marchandises, qui est facile à positionner, qui s'adapte à toutes les largeurs de convoyeurs et qui est bien protégé afin d'éviter tout dérèglement.

Ce but est atteint par un dispositif de détection destiné à être positionné dans un convoyeur qui comporte des rouleaux de convoyage disposés entre deux montants latéraux pour convoyer des marchandises selon une direction de convoyage, ce dispositif de détection comportant :
- un support allongé s'étendant sur sa longueur suivant un axe longitudinal, ledit support supportant plusieurs détecteurs répartis le long de son axe longitudinal pour détecter les marchandises portées par le convoyeur,
- ledit support étant destiné à être positionné entre deux rouleaux de convoyage, dans un plan inférieur à une surface de convoyage formée par les rouleaux et fixé entre les deux montants latéraux du convoyeur, transversalement par rapport à la direction de convoyage,
- le support comportant un tube cylindrique creux dans lequel sont insérés les détecteurs, le tube étant muni de plusieurs orifices répartis le long de sa longueur, chaque détecteur étant destiné à fonctionner à travers un orifice du tube.

Selon une autre particularité, le dispositif de détection comporte un circuit imprimé inséré dans le tube et sur lequel sont assemblés les détecteurs.

Selon une autre particularité, le dispositif de détection comporte un microcontrôleur assemblé sur le circuit imprimé et auquel sont connectés les détecteurs.

Selon une autre particularité, le dispositif comporte des moyens de fixation du tube sur les montants latéraux du convoyeur.

Selon une autre particularité, les moyens de fixation comportent un système de rattrapage de longueur permettant d'adapter la longueur du dispositif à la distance séparant deux montants latéraux du convoyeur.

Selon une autre particularité, les moyens de fixation comportent des moyens pour orienter le dispositif selon différents angles autour de l'axe longitudinal.

Selon une autre particularité, chaque détecteur est de type photoélectrique ou ultrasonique.

L'invention concerne également un système de convoyage comportant :
- un convoyeur doté de plusieurs rouleaux de convoyage disposés entre deux montants latéraux pour convoyer des marchandises selon une direction de convoyage,
- un dispositif de détection tel que défini ci-dessus, ledit dispositif de détection étant positionné entre deux rouleaux de convoyage dans un plan inférieur à une surface de convoyage formée par les rouleaux et fixé entre les deux montants latéraux du convoyeur, transversalement par rapport à la direction de convoyage (D).

D'autres caractéristiques et avantages vont apparaître dans la description détaillée qui suit en se référant à un mode de réalisation donné à titre d'exemple et représenté par les dessins annexés sur lesquels :
- la figure 1 représente un convoyeur à rouleaux dans lequel est intégré le dispositif de détection de l'invention,
- la figure 2 représente le dispositif de détection de l'invention,
- la figure 3 représente le tube du dispositif de détection de l'invention,
- la figure 4 représente le circuit imprimé du dispositif de détection destiné à être inséré dans le tube représenté en figure 3,
- la figure 5 représente en détail une première extrémité du dispositif de détection de l'invention,
- la figure 6 représente en détail une seconde extrémité du dispositif de détection de l'invention,
- la figure 7 représente un embout standard destiné à fermer une extrémité du tube du dispositif de détection,
- la figure 8 représente un embout spécifique doté d'un système pour adapter la longueur du dispositif de l'invention,
- la figure 9 représente un organe de fixation destiné à accueillir le dispositif sur le convoyeur.

L'invention concerne un dispositif de détection 2 destiné à détecter les marchandises se déplaçant sur un convoyeur 1.

Le dispositif de détection de l'invention est plus particulièrement conçu pour s'adapter sur un convoyeur 1 à rouleaux. Cependant, il faut comprendre qu'il pourrait tout à fait s'adapter à d'autres types de convoyeurs dans la mesure où ces convoyeurs sont agencés pour accueillir et faire fonctionner le dispositif de détection de l'invention.

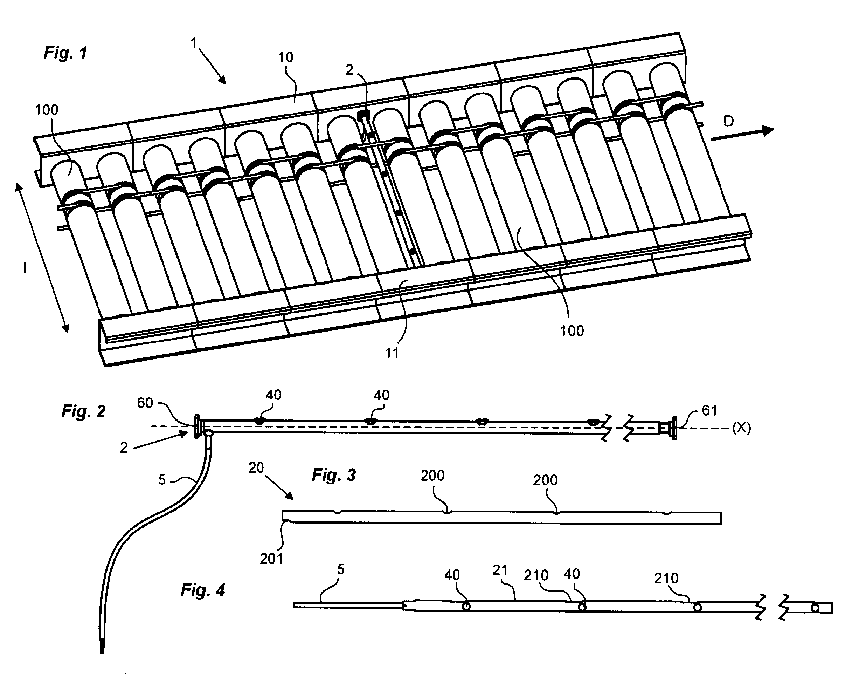

En référence à la figure 1, un convoyeur 1 à rouleaux comporte par exemple deux montants latéraux 10, 11 entre lesquels sont positionnés plusieurs rouleaux 100 destinés à entraîner des marchandises sur le convoyeur 1 selon une direction de convoyage D. Les rouleaux 100 du convoyeur 1 sont par exemple tous identiques et positionnés parallèlement entre eux lorsque la direction de convoyage D est rectiligne. Si la direction de convoyage D est courbée, les rouleaux 100 sont orientés pour suivre cette direction de convoyage.

Le dispositif de détection 2 de l'invention présente la particularité de pouvoir s'installer directement au sein du convoyeur 1, entre deux rouleaux 100 du convoyeur 1. Ainsi, le dispositif de détection utilise directement les montants latéraux 10, 11 du convoyeur 1 comme support de fixation. Positionné entre deux rouleaux 100 du convoyeur, dans un plan inférieur à la surface de convoyage formée par les rouleaux 100, le dispositif de détection 2 s'avère difficilement accessible, ce qui le protège des agressions extérieures. Par ailleurs, compte tenu de sa position, le dispositif de détection 2 de l'invention, avec une architecture particulière, peut détecter le passage des marchandises sur le convoyeur quelle que soit la taille des marchandises convoyées. Le dispositif de détection 2 peut être disposé parallèlement aux rouleaux du convoyeur et donc perpendiculairement à la direction de convoyage D, ou en oblique par rapport aux rouleaux 100. Sa position ainsi que son orientation sont totalement adaptables aux conditions ou à l'application.

Par ailleurs, le dispositif de détection 2 de l'invention présente une architecture particulière qui lui permet de détecter les marchandises, quelles que soient leur taille et leur position, sur toute la largeur (I, figure 1) du convoyeur 1, mesurée entre les deux montants latéraux 10, 11 du convoyeur. Pour cela le dispositif de détection de l'invention embarque plusieurs détecteurs 40 sur un même support. Les détecteurs sont par exemple espacés entre eux d'une distance inférieure à la largeur minimale des marchandises et chaque détecteur 40 est par exemple capable d'activer la sortie du dispositif 2 indépendamment l'un de l'autre, ce qui permet de détecter le passage d'une marchandise sur toute la largeur du convoyeur 1. Les détecteurs peuvent être de type photoélectrique ou ultrasonique. D'autres types de détecteurs peuvent parfaitement être employés.

En référence à la figure 2, le dispositif de détection 2 comporte un support tel que par exemple un tube 20 cylindrique (figure 3) creux comportant deux extrémités opposées. Le tube 20 est ouvert à chacune de ses extrémités et doté de plusieurs orifices 200 répartis sur sa longueur, par exemple tous les dix centimètres. La longueur du tube 20 est choisie pour que le dispositif de détection puisse s'étendre sur toute la largeur (1) du convoyeur 1.

En référence à la figure 4, le dispositif de détection 2 comporte également un circuit imprimé 21 ayant un profil allongé en vue de pouvoir s'insérer dans le tube 20 représenté sur la figure 3. Le dispositif de détection 2 comporte des circuits électroniques assemblés sur le circuit imprimé 21. Ces circuits électroniques comportent notamment un bloc d'alimentation et un microcontrôleur pour traiter les signaux de détection. Chaque détecteur est également assemblé sur le circuit imprimé 21 et connecté aux circuits électroniques et notamment au microcontrôleur. Les détecteurs sont répartis le long du circuit imprimé 21 de manière à coïncider chacun avec un orifice 200 formé à travers le tube 20 du dispositif lorsque le circuit imprimé 21 y est inséré. Selon l'invention, le circuit imprimé 21 présente la particularité de comporter des entailles 210 réparties sur sa longueur, permettant de découper aisément le circuit imprimé 21 en vue d'adapter sa longueur à celle du tube 20 et donc de choisir le nombre de détecteurs à insérer dans le dispositif de détection 2.

Un câble 5, par exemple à trois fils, comporte les fils destinés à l'alimentation des circuits électroniques et des détecteurs et au moins un fil pour le signal de sortie du dispositif, ce fil étant connecté au microcontrôleur. La sortie peut être du type PNP ou NPN ou PNP et NPN. Le câble 5 est connecté sur le circuit imprimé 21 de manière à présenter une sortie radiale. Pour faciliter la sortie radiale du câble 5, le tube 20 présente une échancrure 201 à l'une de ses extrémités. Le câble 5 peut comporter un quatrième fil connecté au microcontrôleur et destiné à recevoir un signal d'entrée employé éventuellement pour réaliser une chaîne de dispositifs en connectant la sortie d'un dispositif à l'entrée d'un dispositif adjacent. De cette manière, le microcontrôleur de chaque dispositif active sa sortie ce qui permet de commander l'avancement des marchandises sur le convoyeur dans les conditions où elles n'entrent pas en contact les unes avec les autres.

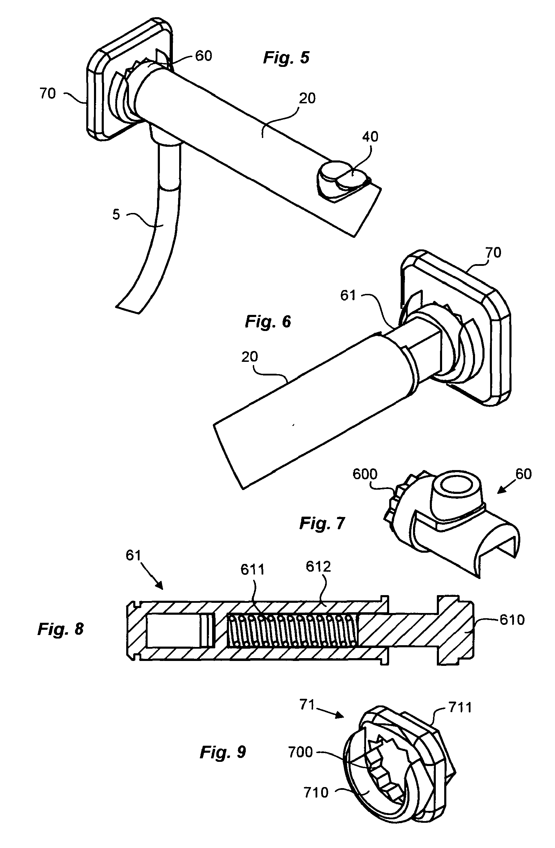

En référence aux figures 5 et 6, à chaque extrémité du tube 20, le dispositif comporte un embout 60, 61 destiné à fermer le tube 20. Les deux embouts 60, 61 sont configurés pour venir se positionner dans un organe de fixation 70, 71 monté sur les deux montants 10, 11 latéraux du convoyeur 1. Les organes de fixation 70, 71 peuvent prendre différentes formes selon le type de fixation employé sur les montants latéraux du convoyeur. Sur la figure 9, l'organe de fixation 71 comporte par exemple une partie 710 pour accueillir un embout 60, 61 du dispositif et une forme hexagonale 711 destinée à s'insérer dans un orifice hexagonal réalisé à travers le montant 10, 11 latéral du convoyeur 1. Chaque organe de fixation peut comporter des crans 700 (figure 9) espacés angulairement et destinés à coopérer avec des crans 600 correspondants réalisés sur chaque embout 60, 61 du dispositif de détection 2. Ce mécanisme de crans permet de pouvoir donner différentes orientations au dispositif 2 autour de son axe longitudinal (X).

Selon l'invention, l'embout 61 représenté sur la figure 8, comporte un système élastique permettant au dispositif 2 d'adapter sa longueur à la largeur (I) du convoyeur 1. L'embout 61 comporte par exemple un piston 610 monté en appui contre un ressort 611 pour se déplacer à l'intérieur d'une chemise 612.

## Revendications

1. Dispositif de détection (2) destiné à être positionné dans un convoyeur (1) qui comporte des rouleaux (100) de convoyage disposés entre deux montants latéraux (10, 11) pour convoyer des marchandises selon une direction de convoyage (D), **caractérisé en ce que** le dispositif comporte :
- un support allongé s'étendant sur sa longueur suivant un axe longitudinal (X), ledit support supportant plusieurs détecteurs (40) répartis le long de son axe longitudinal (X) pour détecter les marchandises portées par le convoyeur (1),
- ledit support étant destiné à être positionné entre deux rouleaux (100) de convoyage dans un plan inférieur à une surface de convoyage formée par les rouleaux (100) et fixé entre les deux montants (10, 11) latéraux du convoyeur (1), transversalement par rapport à la direction de convoyage (D),
- le support comportant un tube (20) cylindrique creux dans lequel sont insérés les détecteurs (40), le tube étant muni de plusieurs orifices (200) répartis le long de sa longueur, chaque détecteur (40) étant destiné à fonctionner à travers un orifice (200) du tube.

2. Dispositif selon la revendication 1, **caractérisé en ce qu'**il comporte un circuit imprimé (21) inséré dans le tube (20) et sur lequel sont assemblés les détecteurs (40).

3. Dispositif selon la revendication 2, **caractérisé en ce qu'**il comporte un microcontrôleur assemblé sur le circuit imprimé (21) et auquel sont connectés les détecteurs (40).

4. Dispositif selon l'une des revendications 1 à 3, **caractérisé en ce que** le dispositif, comporte des moyens de fixation (70, 71) du tube (20) sur les montants (10, 11) latéraux du convoyeur (1).

5. Dispositif selon la revendication 4, **caractérisé en ce que** les moyens de fixation comportent un système de rattrapage de longueur permettant d'adapter la longueur du dispositif (2) à la distance (I) séparant deux montants (10, 11) latéraux du convoyeur (1).

6. Dispositif selon la revendication 4 ou 5, **caractérisé en ce que** les moyens de fixation comportent des moyens pour orienter le dispositif selon différents angles autour de l'axe longitudinal (X).

7. Dispositif selon l'une des revendications 1 à 6, **caractérisé en ce que** chaque détecteur (40) est de type photoélectrique.

8. Dispositif selon l'une des revendications 1 à 6, **caractérisé en ce que** chaque détecteur est de type ultrasonique.

9. Système de convoyage comportant :
- un convoyeur (1) doté de plusieurs rouleaux (100) de convoyage disposés entre deux montants (10, 11) latéraux pour convoyer des marchandises selon une direction de convoyage (D), comportant
un dispositif de détection (2),
ledit dispositif de détection (2) étant positionné entre deux rouleaux (100) de convoyage dans un plan inférieur à une surface de convoyage formée par les rouleaux (100) et fixé entre les deux montants (10, 11) latéraux du convoyeur, transversalement par rapport à la direction de convoyage (D), - **caractérisé en ce que**
ledit dispositif de détection (2) est tel que défini dans l'une des revendications précédentes.

## Claims

1. Detection device (2) intended to be positioned in a conveyor (1) which comprises conveying rollers (100) arranged between two lateral uprights (10, 11) to convey goods in a conveying direction (D), **characterized in that** the device comprises :
- an elongate support extending over its length along a longitudinal axis (X), said support supporting a number of detectors (40) distributed along its longitudinal axis (X) to detect the goods borne by the conveyor (1),
- said support being intended to be positioned between two conveying rollers (100) in a plane lower than the conveying surface formed by the rollers (100) and fixed between the two lateral uprights (10, 11) of the conveyor (1), transversally relative to the conveying direction (D),
- the support comprising a hollow cylindrical tube (20) into which are inserted the detectors (40), the tube being provided with a number of orifices (200) distributed along its length, each detector (40) being intended to function through an orifice (200) of the tube.

2. Device according to Claim 1, **characterized in that** it comprises a printed circuit (21) inserted into the tube (20) and on which the detectors (40) are assembled.

3. Device according to Claim 2, **characterized in that** it comprises a microcontroller assembled on the printed circuit (21) and to which the detectors (40) are connected.

4. Device according to one of Claims 1 to 3, **characterized in that** the device comprises means for fixing (70, 71) the tube (20) to the lateral uprights (10, 11) of the conveyor (1).

5. Device according to Claim 4, **characterized in that** the fixing means comprise a length adjustment system for adapting the length of the device (2) to the distance (I) separating two lateral uprights (10, 11) of the conveyor (1).

6. Device according to Claim 4 or 5, **characterized in that** the fixing means comprise means for orienting the device at different angles around the longitudinal axis (X).

7. Device according to one of Claims 1 to 6, **characterized in that** each detector (40) is of photoelectric type.

8. Device according to one of Claims 1 to 6, **characterized in that** each detector is of ultrasound type.

9. Conveying system comprising :
- a conveyor (1) provided with a number of conveying rollers (100) arranged between two lateral uprights (10, 11) to convey goods in a conveying direction (D), comprising
- a detection device (2), said detection device (2) being positioned between two conveying rollers (100) in a plane lower than a conveying surface formed by the rollers (100) and fixed between the two lateral uprights (10, 11) of the conveyor, transversally relative to the conveying direction (D), **characterized in that** said detection device (2) is as defined in one of the preceding claims.

## Patentansprüche

1. Erfassungsvorrichtung (2), die dazu bestimmt ist, in einer Fördereinrichtung (1) positioniert zu werden, die zwischen zwei seitlichen Holmen (10, 11) angeordnete Förderrollen (100) aufweist, um Waren in einer Förderrichtung (D) zu befördern, **dadurch gekennzeichnet, dass** die Vorrichtung Folgendes aufweist:
- einen länglichen Träger, der sich über seine Länge gemäß einer Längsachse (X) erstreckt, wobei der Träger mehrere Detektoren (40) trägt, die entlang seiner Längsachse (X) verteilt sind, um die von der Fördereinrichtung (1) getragenen Waren zu erfassen,
- wobei der Träger dazu bestimmt ist, quer zur Förderrichtung (D) zwischen zwei Förderrollen (100) in einer Ebene unterhalb einer von den Rollen (100) geformten Förderfläche positioniert und zwischen den zwei seitlichen Holmen (10, 11) der Fördereinrichtung (1) befestigt zu werden,
- wobei der Träger ein zylindrisches Hohlrohr (20) aufweist, in das die Detektoren (40) eingeführt sind, wobei das Rohr mit mehreren entlang seiner Länge verteilten Öffnungen (200) versehen ist, wobei jeder Detektor (40) dazu bestimmt ist, durch eine Öffnung (200) des Rohrs hindurch zu arbeiten.

2. Vorrichtung nach Anspruch 1, **dadurch gekennzeichnet, dass** sie eine gedruckte Schaltung (21) aufweist, die in das Rohr (20) eingeführt ist und auf die die Detektoren (40) montiert sind.

3. Vorrichtung nach Anspruch 2, **dadurch gekennzeichnet, dass** sie einen auf die gedruckte Schaltung (21) montierten Mikrocontroller aufweist, mit dem die Detektoren (40) verbunden sind.

4. Vorrichtung nach einem der Ansprüche 1 bis 3, **dadurch gekennzeichnet, dass** die Vorrichtung Befestigungseinrichtungen (70, 71) des Rohrs (20) an den seitlichen Holmen (10, 11) der Fördereinrichtung (1) aufweist.

5. Vorrichtung nach Anspruch 4, **dadurch gekennzeichnet, dass** die Befestigungseinrichtungen ein Längennachstellsystem aufweisen, das es ermöglicht, die Länge der Vorrichtung (2) an den zwei seitliche Holme (10, 11) der Fördereinrichtung (1) trennenden Abstand (I) anzupassen.

6. Vorrichtung nach Anspruch 4 oder 5, **dadurch gekennzeichnet, dass** die Befestigungseinrichtungen Einrichtungen aufweisen, um die Vorrichtung gemäß verschiedenen Winkeln um die Längsachse (X) auszurichten.

7. Vorrichtung nach einem der Ansprüche 1 bis 6, **dadurch gekennzeichnet, dass** jeder Detektor (40) vom photoelektrischen Typ ist.

8. Vorrichtung nach einem der Ansprüche 1 bis 6, **dadurch gekennzeichnet, dass** jeder Detektor vom Ultraschall-Typ ist.

9. Fördersystem, das Folgendes aufweist:
- eine Fördereinrichtung (1), die mit mehreren Förderrollen (100) versehen ist, die zwischen zwei seitlichen Holmen (10, 11) angeordnet sind, um Waren in einer Förderrichtung (D) zu befördern, die eine Erfassungsvorrichtung (2) aufweist, wobei die Erfassungsvorrichtung (2) quer zur Förderrichtung (D) zwischen zwei Förderrollen (100) in einer Ebene unterhalb einer von den Rollen (100) geformten Förderfläche positioniert und zwischen den zwei seitlichen Holmen (10, 11) der Fördereinrichtung befestigt ist,
**dadurch gekennzeichnet, dass** die Erfassungsvorrichtung (2) wie in einem der vorhergehenden Ansprüche definiert ist.
